# EUROPÄISCHE PATENTSCHRIFT

(11) **EP 0 624 426 B1**
(45) Veröffentlichungstag und Bekanntmachung des Hinweises auf die Patenterteilung: **02.01.1997**
(21) Anmeldenummer: 94105659.0
(22) Anmeldetag: 13.04.1994
(51) Int. Cl.: B23P 25/00

(54) **Verfahren und Anordnung zum Zerspanen von Schichten**
Method and device for machining layers
Méthode et dispositif pour l'usinage de couches

(30) Priorität: 11.05.1993 DE 4315653
(43) Veröffentlichungstag der Anmeldung: 17.11.1994
(73) Patentinhaber: Daimler-Benz Aerospace Airbus Gesellschaft mit beschränkter Haftung, 21129 Hamburg (DE)
(72) Erfinder: Claussen, Uwe, D-21614 Buxtehude (DE); Caro, Peter, D-22851 Norderstedt (DE)
(74) Vertreter: Hansmann, Dierk, Dipl.-Ing.

(56) Entgegenhaltungen:
- DE-A- 3 733 891
- FR-A- 2 133 311
- US-A- 2 586 532
- US-A- 3 605 551
- US-A- 4 037 982
- US-A- 5 024 562

## Beschreibung

Die Erfindung bezieht sich auf ein Verfahren und eine Anordnung zum Zerspanen von Schichten. Mit ihr sind mehrere horizontal übereinander gelagerte Schichten unterschiedlicher und / oder gleicher Festigkeit und Stärke mit einem zwischengeschichteten versprödbaren Material zwischen benachbarten Schichten zerspanend bearbeitbar. Sie findet allgemein bei der spanabhebenden Bearbeitung von Schichtenpaketen, insbesondere in der Luft- und Raumfahrtindustrie, ihre Anwendung.

Es sind Lösungen bekannt, bei denen plattenförmige Schichten mittels Klebstoff oder sonstiger verbindender Materialien miteinander verbunden und einem Zerspanungsprozeß unterzogen werden. Bei diesen verklebten Platten oder sonstigerweise aufgebauten Verbundwerkstoffen wird der Kleber teilweise durch Hitze und unter Druck ausgehärtet und erreicht zunächst eine bleibende plastische Formänderung. Die Bearbeitung derartiger Werkstoffe mit spanabhebenden Methoden ist nachteiligerweise dadurch erschwert, daß nur mit niedrigen Schnittgeschwindigkeiten betriebene spanabhebende Werkzeuge erfolgversprechend einsetzbar sind. Ungeachtet der zeitaufwendigen Technologie ist das Erreichen einer definierten Aussparung, bedingt durch eine mit der Zerspanung wieder einsetzende elastische Verformung des vor Bearbeitungsbeginn einst ausgehärteten Klebers, nicht möglich. Die erwartete Qualität einer derartig eingebrachten Aussparung stellt sich nicht ein.
Weitere bekannte Lösungen tangieren nur indirekt die Bearbeitung von Schichten mit unterschiedlicher Festigkeit. Diesen ist beispielsweise die US - PS 3,979,981 zuzuordnen. Mit ihr ist ein Stanz- und Schneidverfahren bekannt, bei dem Metallblech durch eine Tiefkühlung versprödet wird. Verfahrensgemäß wird bei dieser Lösung ein einlagiges Blech, das außerdem eine besondere Kristallstruktur aufweist, um versprödbar zu sein, durch ein Kühl- bzw. Kältemittel geführt, um es danach abscheren zu können. Das Verspröden einer Blechstruktur zur Schaffung günstiger Voraussetzungen bezüglich seiner Trennung ist also bekannt. Der Lösung haftet allerdings der Nachteil an, daß mit ihr nur die Schneidung bzw. Scherung eines versprödeten Metallbleches durch entsprechende Vorbehandlung mit einer Temperatur von minus 70 ° C möglich ist; nicht aber eine zerspanende Bearbeitung von materialmäßig unterschiedlichen Schichten.

Eine weitere Lösung offenbart nach der WO 81/00368 das Einbringen von Bohrungen in eine geschichteten Leiterplatte mittels einer geeigneten Bohrvorrichtung. Eine Leiterplatte wird dazu flach auf einem Stützmaterial positioniert, wobei letzteres aus zwei übereinander angeordneten Blechplatten mit zwischengelagertem und sinusförmig gebogenem Kernmaterial besteht. Der Kern des Stützmateriales wird mit Luft versorgt, die danach durch gebohrte Löcher der Leiterplatte zu einem Luftauslaß strömt, der mit einem Vakuumsystem in Verbindung steht und zum Entfernen des Bohrgutes bei gleichzeitiger Kühlung der Werkzeugschneide benötigt wird. Die Leiterplatte, die bezeichnenderweise aus einem epoxid- und glashaltigen Trägermaterial mit auf diesem beiderseitig aufgebrachter Kupferschicht besteht, besitzt eine geringe Materialstärke. Das Werkstück wird ohne zusätzliche Bekühlung mit einem Bohrer sehr geringen Durchmessers spanend bearbeitet. Diese Lösung wäre zum Zerspanen von metallischen Schichten mit zwischengeschichteten weichplastigen und versprödbaren Materialien ungeeignet. Der Zerspanungsbereich inclusive das Werkzeug würden sich bereits bei Normaltemperatur während des Zerspanungsvorganges mit metallischem und weichplastischem Spangut vollsetzen. Infolge dessen wäre der Abfluß des Spangutes gestört oder der Bohrer selbst würde wegbrechen, weshalb dann ein Zerspanen kaum mehr möglich wird. Die Bohrungen eines derartig geschichteten Werkstückes würden außerhalb des Toleranzbereiches liegen bzw. sehr ungenau sein.

Aus der EP 0 482 982 ist eine Lösung bekannt, mit der während des Zerspanungsprozesses die Aufrechterhaltung der Kühlmittelzuführ möglich wird. Sie zeigt ein Werkzeug, das innerhalb seiner selbst mindestens einen vertikal verlaufenden Kanal besitzt, der in mehrere Kanalästelungen mündet, die ihren Ausgang zur Werkzeugschneide gerichtet und / oder mittelbar in der Schneidennähe des Werkzeuges besitzen. Das Werkzeug, das ein Reib- und Senkwerkzeug - aber kein Bohrwerkzeug - verkörpert, wird mittels seines Kühlmittelflusses durch den inneren Kanal während des Bearbeitungsprozesses nur die Werkzeugschneiden kühlen - nicht das Werkstück selbst. Zur Kühlung werden Kühlschmiermittel benutzt, die impulsweise innerhalb kürzerer Zeitabstände durch den Kanal strömen. Ein dauerhafter Zufluß des Kühlmittels wäre aus wirtschaftlichen Erwägungen unrentabel. Da die Kühlflüssigkeit nur bei Raumtemperatur in das Werkzeug eingespritzt wird, die eigens die Dämmung der entstehenden Wärme bei der Bearbeitung des Werkstückes im Bearbeitungsraum unterstützt, wird mit dieser Lösung die Erzeugung eines Temperaturgefälles zur Versprödung von geschichteten Blechplatten mit zwischengeschichteten weichplastischen Materialien nicht möglich sein.

Mit den Druckschriften: US 4,037,982; DE 37 33 891; US 5,024,562; US 3,605,551; FR 2.133.311; US 2,586,532 sind weitere Lösungen bekannt, nach denen sich das (Zer)Spanen von Schichten(paketen) betreiben läßt.
Nach der US 4,037,982 wird eine Bohrmaschineneinrichtung offenbart, bei der zum Beseitigen des anfallenden Bohrgutes (Bohrstaub) Druckluft eingesetzt wird. Eine separate Kühlung des Werkstückes bzw. des Bohrers ist nicht vorgesehen. Die Lösung der DE 37 33 891 sieht zur Kühlung und Versprödung diverser Materialien flüssigen Stickstoff vor, wobei das Kühlmittel über die Kühlmittelkanäle eines Bohres zugeführt wird. Nach der US 3,605,551 wird der Zerspanungsvorgang durch die getrennte Zufuhr von Trichlorotrifluoroäthane unterstützt. Weiterhin beschreibt die FR 2.133.311 ein Verfahren, nach dem das zerspanend zu bearbeitende Werkstück, das aus den verschiedensten Materialien bestehen kann, tiefgekühlt wird.
Diese Lösungen wären zum Zerspanen von metallenen Schichten mit zwischengeschichteten weichplastigen und versprödbaren Material als Klebe- oder Dichtungsmaterial oder Lot ungeeignet. Sie geben dafür kein Vorbild.
Die US 5,024,562, die den nächstliegenden Stand der Technik angibt, zeigt eine Bohrmaschineneinrichtung, mit deren Hilfe einem Schichtenpaket diverse Bohrungen eingebracht werden. Dabei wird der Bohrer während des Zerspanungsprozesses mittels Luft gekühlt und das Bohrgut über Kanäle der Einrichtung abgesaugt. Der Druckschrift läßt sich kein Hinweis entnehmen, wonach maßnahmenmäßig zur Schneide des Bohrers gerichtete und / oder in Scheidennähe mündende Kanäle, die einen unterschiedlichen Verlauf innerhalb der Bohreinrichtung einnehmen, verzweigt und untereinander verbunden sind, vorzusehen wären, an die eine Ansaug- oder eine Kühleinrichtung installiert ist. Nach dieser Lösung wird eine Luftkühlung angeregt und eine Absaugung des Bohrgutes vorgeschlagen.
Nach der US 2,586,532 wird nun ein Transformatorkern, der aus mehrlagig gewickelten Magnetblechen besteht, derart behandelt, daß sich in den Trafokernquerschnitt ein Schnitt einbringen läßt. Dazu wird der gesamte Kern in einem mit Wasser gefüllten Behälter gebracht. Das Wasser wird einer Temperatur von minus 40 Grad Fahrenheit (Nähe Gefrierpunkt) ausgesetzt, wobei die Temperatur sich erst nach langer Kühldauer auf den Kern überträgt. Nach Abschluß der Kühlung des Trafokerns auf diese Temperatur nahe dem Celsius-Nullpunkt geschieht seine weitere Bearbeitung mittels einer eigens dafür vorgesehenen Vorrichtung.

Diese Erfindung geht davon aus, daß die metallene Kernstruktur schon derart genug versprödet ist, das sich danach der Kern leicht genug spanen läßt.

Beide letztgenannten Lösungen unterbreiten keine Vorschläge, die dazu anregen würden, das ein Schichtenpaket intensiv tiefgekühlt vorzukühlen und mit einer hohen Einfriertiefe zu versorgen wäre. Es werden keine Maßnahmen vorgeschlagen, nach denen mit dem Vorkühlen ein Schockfrieren des zwischen den (metallenen) benachbarten Schichten eingeschichteten Materials vorzunehmen ist, damit die zwischengeschichtete Schicht versprödet.

Demgemäß liegt der Erfindung die Aufgabe zugrunde, ein gattungsgemäßes Verfahren und eine gattungsgemäße Anordnung derart zu gestalten, daß mit ihnen Irregularitäten der fertig zerspanten Oberfläche eines Schichtenpaketes, bei dem eine versprödbare - aber nicht aushärtbare Schicht den Schichten mit annähernd gleichen Werkstoffparametern zwischenlagert, vermieden werden. Mit ihr soll garantiert sein, daß während des Zerspanungsprozesses kein oder nur ein geringes Eindringen von Spanmaterial in die Randzone der zwischengelagerten Schicht erfolgt und keine oder nur geringe Gratbildung an der Randzone der Aussparung beim Werkzeugaustritt entsteht. Das Erreichen einer definierten Aussparung ist zu gewährleisten. Die ausgangsmäßig vorhandenen Werkstoffparameter der zwischengelagerten Schicht sollen durch den Zerspanungsvorgang nicht beeinträchtigt werden. Das Schwingungsverhalten der angeordneten Schichten ist in Grenzen zu halten und eine lösungsbedingte Umweltbelastung ist weitestgehend auszuschließen.

Diese Aufgabe für ein Verfahren zum Zerspanen von Schichten, die horizontal platten- oder babnenförmig übereinander und zueinander unverrückbar gegen eine Längs- und Querverschiebung angeordnet werden und eine unterschiedliche Festigkeit besitzen sowie ein Schichtenpaket bilden, bei dem mit einem spanabhebenden Werkzeug an einer vorbestimmten Stelle eine Abtrennung von Stoffteilen der Schichten auf mechanischem Wege realisiert wird, wobei während des Zerspanungsprozesses an der Zerspanungsstelle die abgetrennten Stoffteile des Schichtenpaketes und ein kontinuierlich zugeführtes Kühlmittel gemeinsam mit einer in den Zerspanungsraum angesaugten Außenluft durch eine kontinuierliche Absaugung abgeführt werden und nach Beendigung des Zerspanungsprozesses die kontinuierlich fortgesetzte Kühlmittelzufuhr und die Absaugung unterbrochen und nach Abbruch des Zerspanungsvorganges das Werkzeug in seine Ausgangsstellung zurückgeführt wird, wird dadurch gelöst,
- daß während eines Positionierungsvorganges des Werkzeuges gleichzeitig eine Vorkühlung der Schichten vorgenommen wird und daß das Schichtenpaket zumindest in einem bestimmten Bereich, der dem späteren Zerspanungseinfluß des Werkzeuges unterliegt und maßgeblich die spanabhebende Bearbeitung an der Zerspanungsstelle beeinflußt, intensiv tiefgekühlt vorgekühlt und mit einer hohen Einfriertiefe versorgt wird, wobei die Vorkühlung oder die kontinuierlich fortgesetzte Kühlung mit einem gasförmigen und / oder flüssigen Kühlmittel realisiert wird,
- daß die Tiefkühlung mit einer Temperatur realisiert wird, bei der das zwischen benachbarten Schichten, die aus Halbzeugen als Blechplatte bestehen, eingeschichtete Material versprödet wird,
- daß nach Abschluß des Positioniervorganges und der Vorkühlung der Zerspanungsprozeß mit einer hohen Schnittgeschwindigkeit an die Zerspanungsstelle realisiert wird,
- daß nach Abbruch des Zerspanungsvorganges die Versprödung des zwischengeschichteten Materiales aufgehoben wird.

Mit dem Vorkühlen wird ein Schockgefrieren des zwischen den benachbarten Schichten eingeschichteten Materiales mit dem Kühlmittel, vorzugsweise gasförmigen Kühlmittel, eintreten.

Die Kühlmittelzufuhr wird auf das Schichtenpaket während der Vorkühlung und während des Zerspanungsprozesses unter Druck und durch Kühlmittelblasung realisiert, wobei der bestimmte Bereich des Schichtenpaketes kurzzeitig tiefgekühlt wird.

Die vorbestimmte Stelle wird vor Einleitung des Positioniervorganges mit mindestens einer Vorbohrung in einer oberen Schicht des Schichtenpaketes versehen und die Positionierung des Werkzeuges, die programmiert und / oder manuell vorgenommen und elektronisch und / oder visuell überprüft und möglicherweise korrigiert wird, wird dort erfolgen.

Der Zerspanungsprozeß wird mit radialer und / oder axialer Vorschubbewegung des Werkzeuges und / oder des Schichtenpaketes realisiert, wobei die Zerspanung mit geeignetem Werkzeug vorzugsweise durch Bohren oder Senken oder Fräsen und ohne oder nur sehr geringem Eindringen der abgetrennten Stoffteile in das zwischengeschichtete Material und ohne oder nur sehr geringer Gratbildung an den zerspanten Schichten und ohne Beeinträchtigung der ausgangsmäßig vorhandenen Werkstoffparameter des zwischengeschichteten Materiales realisiert wird. Der Zerspanungsprozeß wird bei nicht fortgesetzter kontinuierlicher Kühlmittelzufuhr vorwiegend trocken erfolgen.

Eine Anordnung zur Durchführung des vorstehend beschriebenen Verfahrens zum Zerspanen von Schichten, die horizontal platten- oder bahnenförmig übereinander und zueinander unverrückbar gegen eine Längs- und Querverschiebung angeordnet sind und eine unterschiedliche Festigkeit besitzen sowie ein Schichtenpaket bilden, bei der ein spanabhebendes Werkzeug an einer vorbestimmten Stelle zur Abtrennung von Stoffteilen der Schichten auf mechanischem Wege angeordnet ist, bei der ein ebenflächiger und / oder gekrümmtflächiger Körper, dessen Begrenzungsflächen eine axialsymmetrische Figur darstellen, mit seiner Grundfläche plan auf der Deckfläche der oberen Schicht des Schichtenpaketes fixierbar und mit einer vertikalen Öffnung, die entlang einer Symmetrieachse eingelassen und lotrecht der Grundfläche des Körpers angeordnet ist, versehen ist, durch die das spanabhebende Werkzeug bis auf die Deckfläche der oberen Schicht des Schichtpaketes mit seiner Schneidengeometrie bewegungsfrei einführbar ist, bei der mindestens einer der eingangsseitig an der Manteloberfläche des Körpers beginnenden Kanäle an eine Absaugvorrichtung angeschlossen ist und innerhalb des Werkzeuges mindestens ein weiterer Kanal vertikal verlaufend angeordnet ist, der in mehrere Kanalästelungen mündet, die ihren Ausgang zur Schneide gerichtet und / oder mittelbar in der Schneidennähe des Werkzeuges besitzen, bei der an das Werkzeug eine Kühlmittelzuführeinrichtung angeschlossen ist, wobei ein von ihr bereitgestelltes Kühlmittel zum Transport durch den weiteren Kanal und dessen Kanalästelungen vorgesehen ist, wird dadurch gelöst,
- daß in den Körper mehrere Kanäle radial und / oder horizontal und / oder vertikal eingearbeitet sind und der Verbund dieser unterschiedlich verlaufenden Kanäle vorgesehen ist, deren Eingang an der Manteloberfläche des Körpers liegt und deren Ausgang in die vertikale Öffnung zur Schneide gerichtet und / oder mittelbar in die Schneidennähe des Werkzeuges mündet und daß bei der mindestens einer der ausgangsseitig zur Schneide gerichteten und / oder in die Schneidennähe mündenden Kanäle des Körpers an eine Ansaug- oder an die Kühleinrichtung angeschlossen ist,
- daß der Verlauf der vertikal eingelassene Öffnung entlang der Deckfläche des Körpers horizontal und / oder vertikal und / oder radial realisiert ist,
- daß ein Führungselement, vorzugsweise eine Führungsbuchse, das zur Aufnahme des Werkzeuges dient, in die vertikale Öffnung fest eingepaßt ist,
- daß das Schichtenpaket aus wenigstens drei Schichten zusammengesetzt ist,
- daß die Schichten mit Halbzeugen aus Metall oder Kunststoff oder metallisierten Kunststoff oder metall- oder kunststoffähnlichen Materialien und zwischen diesen mit einem eingeschichtetem versprödbarem weichplastigen Material als Klebe- oder Dichtungsmaterial oder Lot, das sich wechselweise erhärten oder erweichen läßt, realisiert sind und die obere und die untere Schicht (2) als Blechplatte, vorzugsweise aus einer Aluminiumlegierung bestehend, angeordnet ist.

Der Körper ist mit einer glockenförmigen Gestalt realisiert. Er läßt sich vertikal und variabel in Richtung der Symmertieachse verstellen. Seine vertikale Öffnung liegt an der Austrittsstelle der Symmetrieachse deckungsgleich einer in die oberen Schicht des Schichtenpaketes eingebrachten Vorbohrung, die zur Zentrierung der Schneide des Werkzeuges dient.

Die Bewegungsart des spanabhebenden Werkzeuges, das ein Hartstoffbohrer oder ein Hartstofffräser, vorzugsweise ein Spiralbohrer oder ein Messerkopf- oder ein Langloch- oder ein Schaftfräser für verschiedene Materialien unterschiedlicher Festigkeit, ist, ist gradlinig und / oder kreisförmig. Seine Bewegungsrichtung innerhalb des Körpers ist horizontal und / oder vertikal veränderbar. Mit ihm ist eine hohe Schnittgeschwindigkeit realisierbar. In seinem Werkzeugschaft befindet sich eine Schnittstelle zur Aufnahme des Kühlmittels. Seine stoffteileabtrennende Manteloberfläche ist speziell beschichtet oder sein Material und seine Schneidengeometrien sind entsprechend der abzutrennenden Stoffteileart der Schichten gewählt.

Zwischen der Grundfläche des Körpers, die eine vertikale Öffnung aufweist, und der oberen Schicht des Schichtenpaketes ist ein platten- oder ringförmiges Schutzelement mit einer Aussparung angeordnet, die kongruent der Öffnung liegt. Das Schutzelement stellt einen Hohlkörper, vorzugsweise einen Schutzring, darstellt, der mit dem Zerspanungsraum und der Ansaug-oder Kühleinrichtung verbunden ist. Zwischen dem Schutzelement und der oberen Schicht des Schichtenpaketes ist wenigstens ein zusätzlicher Kanal angeordnet, der mit dem Zerspanungsraum und der Ansaug- oder Kühleinrichtung verbunden ist.

Der Ausgang der an die Absaugeinrichtung angeschlossenen Kanäle ist in der vertikalen Öffnung mit einem Absaugstutzen und mit einer Verwirbelungsdüse zur optimalen Abführ der Stoffteile der Schichten versehen. Die Schneidengeometrie des Werkzeuges, vorzugsweise eine verwirbelungsgünstige Schneidengeometrie, ist auf die Verwirbelungsdüsen abgestimmt. Es ist eine speziell angeschliffene oder gesinterte Schneidengeometrie zur Erzeugung staubförmiger Stoffteile. Der Ausgang der an die Kühleinrichtung angeschlossenen Kanäle besitzt in der vertikalen Öffnung eine trichterförmige Austrittsdüse besitzt. Innerhalb der mit der Absangeinrichtung verbundenen Kanäle realisiert mindestens ein dort angeordneter Sensor die Erfassung der Durchflußmenge, der Strömungsgeschwindigkeit, der Temperatur- und Druckunterschiede des abgeführten Mediums und die Feststellung der Zerspanungstiefe im Schichtenpaket und die Unterbrechung des Zerspanungvorganges. Der Sensor steht mit einer elektronischen Auswerteeinheit in Verbindung. Das durch einen oder mehrere Kanäle des Körpers zur Absaugeinrichtung abgeführte Medium besteht aus dem Kühlmittel und der angesaugten Luft der Ansaugvorrichtung.

Die mit der Erfindung erzielten Vorteile bestehen insbesondere darin, daß diese Lösung eine Systemlösung zum Zerspanen von Schichten anbietet, mit der die zerspanende Bearbeitung horizontal angeordneter Schichten möglich ist.

Zwischen zwei benachbarten Schichten mit annähernd gleichen Werkstoffparametern ist eine zwischengelagerte nicht aushärtbare aber versprödbare Schicht, die wechselweise durch Temperaturbeeinflußung erhärtet oder erweicht, angeordnet. Mit dieser Lösung ist garantiert, daß während des Zerspanungsprozesses kein oder nur ein geringes Eindringen von Spanmaterial in die Randzone der zwischengelagerten Schicht erfolgt und keine oder nur geringe Gratbildung an der Randzone der Aussparung beim Werkzeugaustritt entsteht. Das Erreichen einer definierten Aussparung ist gewährleistet. Die ausgangsmäßig vorhandenen Werkstoffparameter der zwischengelagerten Schicht ist durch den Zerspanungsvorgang nicht beeinträchtigt. Das Schwingungsverhalten der angeordneten Schichten hält sich in Grenzen. Eine lösungsbedingte Umweltbelastung ist weitestgehend ausgeschlossen. Vorteilhaft ist bei dieser Lösung weiterhin, daß die vertikale Einbringung einer Aussparung in das aus den genannten Schichten zusammengefaßte Schichtenpaket auch ohne Unterstützung von zusätzlichen Vorspannkräften in relativ kurzer Zeit und mit hoher Qualität möglich ist. Auch das vorwiegend trockene Bearbeiten der Zerspanungsstelle stellt sich als Zusatzvorteil dar. Der unkomplizierte Aufbau der Anordnung bzw. die effiziente Realisierung des Verfahrens mit einem hohen technologischen Niveau gestattet eine kostengünstige und rationelle Einbringung von Aussparungen in derartig beschriebene Schichtenpakete.

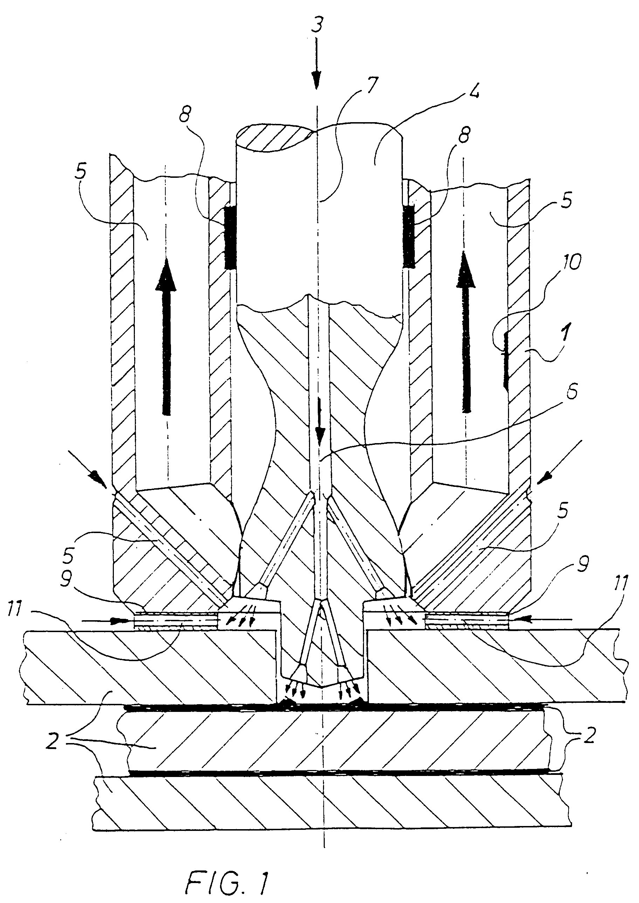

Die Erfindung ist anhand der Zeichnung dargestellt und in einem Ausführungsbeispiel näher beschrieben. Es zeigt
- Fig. 1: die erfindungsgemäße Anordnung zum Zerspanen von Schichten.

Die Schichten (2) sind horizontal platten- oder bahnenförmig übereinander angeordnet. Sie sind zueinander unverrückbar gegen eine Längs- und Querverschiebung fixiert und bilden zusammen ein Schichtenpaket. Zwischen zwei benachbarten Schichten (2) gleicher oder verschiedener Materialart, beispielsweise Halbzeugen aus Stahl oder Nichteisenmetall (Kunststoff); hier: Bleche, mit gleicher oder unterschiedlicher Festigkeit, vorzugsweise aber annähernd gleichen Werkstoffparametern, und günstigerweise gleicher Stärke, ist eine nicht aushärtbare Materialschicht (2) zwischengeschichtet oder -gelagert, die entsprechend den aktuellen Temperaturverhältnissen wechselweise erhärt- oder erweichbar ist. Diese zwischengelagerte Schicht besteht beispielgemäß aus einer Klebe- oder Dichtungsmasse oder einem sonstigen versprödbaren weichplastigen Material, die sich zwischen zwei Blechen befindet und außerdem einen zähweichen Zustand besitzt. Die obere und untere Schicht des Schichtenpaketes wird immer durch ein Halbzeug verkörpert.

Ein spanabhebendes Werkzeug (4), beispielsweise ein Bohrer, ein Senker oder ein Fräser, wird entlang einer Symmetrieachse (7) oder lotrecht zur Grundfläche des Körpers (1), an einer vorbestimmten Stelle der oberen Blechplatte des Schichtenpaketes mit seiner Werkzeugschneide positioniert. Die Positionierung des Werkzeuges (4) wird programmiert und / oder manuell vorgenommen. Sie wird elektronisch und / oder visuell überwacht und gegebenenfalls korrigiert. Geschieht eine manuelle Positionierung (Zentrierung) des beispielgemäßen Bohrers, so erfolgt an genannter vorbestimmten Stelle vor Einleitung des Positioniervorganges eine Vorbohrung der oberen Schicht des Schichtenpaketes, in der die Bohrerschneide aufgesetzt wird. Während des Positioniervorganges erfolgt gleichzeitig eine Vorkühlung des genannten Schichtenpaketes zumindestens in einem bestimmten Bereich mit einem geeigneten und unter Druck stehenden Kühlmittel, das einen gasförmigen oder flüssigen Aggregatzustand, vorzugsweise stark unterkühlte Luft oder gasförmiger bzw. flüssiger Stickstoff, besitzt. Das Kühlmittel wird vorzugsweise kürzeitig und im gasförmigen Zustand auf das Schichtenpaket geblasen, wobei ein Schockgefrieren der zwischengelagerten Schicht(en) einsetzt.

Dieser bestimmte Bereich, der dem späteren Zerspanungseinfluß des Werkzeuges unterliegt und maßgeblich die spanabhebende Bearbeitung an der Zerspanungsstelle, beispielsweise durch Bohren, qualitativ und quantitativ beeinflußt, wird intensiv tiefgekühlt, damit die zwischengelagerte(n) Schicht(en) des Werkstückes verspröden. Nach dem Abschluß des Positioniervorganges und der Vorkühlung wird beispielgemäß der Zerspanungsprozeß mit einem Bohrer, vorzugsweise ein Hartstoffbohrer, eingeleitet. Der Bohrer bewegt sich beispielgemäß mit axialer Vorschubbewegung und mit hoher Schnittgeschwindigkeit durch die Schichten (2) des Werkstückes.
Während des Bohrvorganges wird die Kühlmittelzufuhr unter Druck an die Bohrungsstelle mit geeigneten Kühlmitteln (der bereits bei der Vorkühlung) benutzten Art kontinuierlich fortgesetzt. Die mit der Bohrbewegung abgetrennten Stoffteile des Schichtenmateriales in der Gestalt von Metall-oder Plastespänen oder Staub des sprödbaren Materiales werden gemeinsam mit einer in den Zerspanungsraum separat angesaugten Außenluft kontinuierlich und unter Druck abgesaugt. Nach Beendigung des Bohrvorganges erfolgt eine Unterbrechung der erwähnten Kühlmittelzufuhr und der Absaugung. Das Bohrwerkzeug wird in seine Ausgangsstellung zurückgeführt und die Versprödung des zwischengeschichteten Materiales aufgehoben.

Ergänzend sei genannt, daß der eigentliche Bohrvorgang vorwiegend auch ohne zusätzliche Kühlmittelzuführ durchgeführt wird. Das setzt voraus, daß das Schichtenpaket während der Einbringung der Bohrung(en) seinen weitestgehend tiefgekühlten Zustand beibehält und die entstehende Wärme an der Bohrstelle während dieser Zeit diesen Zustand nur unwesentlich beeinflußt. Die trockene Bearbeitung der Schichten ist im engeren Sinne nur bei der Einbringung von Bohrungen Kleineren Durchmessers optimal.

Die in Fig. 1 dargestellte Anordnung besteht im wesentlichen aus dem Schichtenpaket, einem ebenflächigen und / oder gekrümmtflächigen Körper (1) und dem spanabhebenden Werkzeug (4). Das Schichtenpaket besteht aus mehreren hotizontal platten- oder bahnenförmig übereinander angeordneten Schichten (2), die zueinander unverrückbar gegen eine Längs- und Querverschiebung angeordnet sind. Zwischen zwei benachbarten Schichten (2) des Schichtenpaketes mit gleicher Stärke, die beispielweise durch Blechplatten aus einer im Flugzeugbau fachüblichen Aluminiumlegierung verkörpert sind, befindet sich eine zähweiche Klebe- oder Dichtungsschicht (2), die versprödbar ist. Im Flugzeugbau gelangen häufig Blechplatten aus AlCuMg - Duraluminium nach LN 3.1354 T 351 oder LN 3.1364 T 3 zur Anwendung. Diese Schichtung kann sich mehrlagig fortsetzen.

Das Schichtenpaket schließt immer mit einer oberen und unteren Schicht (2) aus genanntem Blech ab. Der ebenflächige und / oder gekrümmtflächige Körper (1), dessen Begrenzungsflächen eine axialsymmetrische Figur darstellen, besitzt die Gestalt eines Würfels, durch den entlang einer Symmetrieachse (7) von der Deck- zur Grundfläche eine durchgehende vertikale Öffnung (3) getrieben ist. Eine glockenförmige Gestaltung des Körpers (1) ist im engeren Sinne ebenso realisierbar. In den Körper (1) sind mehrere Kanäle (5) eingearbeitet, die radial und / oder horizontal und / oder vertikal verlaufen.

Beispielgemäß besitzt der Körper (1) mindestens einen Kanal (5), dessen Eingang an der Manteloberfläche des Körpers (1) liegt und dessen Ausgang in die vertikale Öffnung (3) des Körpers (1) mündet. Dieser Kanal besitzt einen Verlauf, der etwa oder kleiner einen Winkel von 45° (fünfundvierzig Grad) beim Bohren und bis zu 90° (neunzig Grad) beim Fräsen zwischen der Grundfläche des Körpers (1) und seinem Eingang besitzt. Wenigstens ein andere Kanal (5), dessen Verlauf zunächst ausgangsseitig beginnend dem vorher genannten Kanal (5) annähernd gleich ist, schließt eingangsseitig mit seinem vertikalen Verlauf an der Deckfläche des Körpers (1) ab. Der Eingang diese Kanales (5) mündet ebenso in die vertikale Öffnung (3) des Körpers (1). Diese Kanäle (5) sollen einen kreisförmigen Querschnitt besitzen, wobei der letztgenannte Kanal (5) einen größeren Querschnitt hat.

In der vertikalen Öffnung (3) ist das spanabhebende Werkzeug (4) axialsymmetrisch angeordnet. Beispielgemäß ist ein Bohrer gewählt, dessen rotationssymmetrischer Verlauf durch ein oder mehrere Führungselemente (8) unterstützt wird. Diese Führungselemente (8) sind entweder in Gestalt eines oder mehrerer Dichtringe oder einer Führungsbuchse in die vertikale Öffnung (3) eingepaßt. Innerhalb des Bohrers verläuft axialsymmetrisch ein weiterer Kanal (6) vertikal, der in mehrere Kanalverästelungen mündet. Diese Verästelungen sind kanalausgangsseitig zur Bohrerschneide und / oder mittelbar in dessen Schneidennähe gerichtet, wobei sie sich wenigstens innerhalb des Zerspanungsraumes in Nähe der Bohrstelle befinden. Die Bohrerschneide wird an einer vorbestimmten Stelle der oberen Schicht (2) des Schichtenpaketes positioniert. Zwischen der Grundfläche des Körpers (1) und der oberen Schicht (2) befindet sich ein platten- oder ringförmiges Schutzelement (9), das ein Hohlkörper ist. In das Schutzelement (9) ist axialsymmetrisch eine Bohrung eingelassen. Der Ausgang des Schutzelementes (9) ist mit dem Zerspanungsraum verbunden. Die vertikale Öffnung (3) und die Bohrung des Schutzelementes (9) sind kongruent zueinander anzuordnen, da durch beide Öffnungen der Bohrerschaft geführt wird.

Alle im Körper (1) angeordneten Kanäle (5) sind ausgangsseitig zur Bohrerschneide oder mittelbar zur Schneidennähe des Bohrers gerichtet. Sie münden aber mindestens in den Zerspanungsraum des Bohrers. Der Eingang des einen [mit einem definierten Winkel in die vertikale Öffnung (3) eintretenden] im Körper (1) befindlichen Kanales (5) und der Eingang des Schutzelementes (9) sind an eine Ansaug- und / oder an eine Kühleinrichtung angeschlossen. Der Eingang des anderen Kanales (5) im Körper (1) ist mit einer Absaugeinrichtung verbunden.

Das beispielgemäße Schichtenpaket wird vor seiner zerspanenden Bearbeitung, hier eine einzubringende Bohrung, verfahrensgemäß in der vorher beschriebenen Weise vorgekühlt. Während der Versprödung der im Schichtenpaket befindlichen weichplastischen Schicht(en) (2) erfolgt mit dem Aufsetzen des Körpers (1) auf die obere Schicht (2) des Schichtenpaketes die vorher verfahrensbedingte genaueste Positionierung des Bohrers, der vorzugsweise ein Hartstoffbohrer sein sollte, mit seiner Schneide an der genannten vorbestimmten Stelle des Werkstückes. Mit der Einleitung der Drehbewegung des Bohrers und dem Erreichen seiner optimalen Drehzahl wird der Bohrvorgang eingeleitet und mit optimaler Schnittgeschwindigkeit ausgeführt. Die Kühlung der Zerspanungsstelle bzw. der diversen Lagen des Schichtenpaketes mit einem gasförmigen und / oder flüssigen Kühlmittel über den einen Kanal des Körpers (1) und / oder das Schutzelement (9) und auch über den weiteren Kanal (6) des Bohrers wird während des Bohrvorganges im Bedarfsfall fortgesetzt, um das Erreichen einer definierten Bohrung zu garantieren.

Gleichzeitig erfolgt während des Bohrens eine kontinuierliche Absaugung der Bohrspäne über den anderen Kanal (5) des Körpers (1) in der bereits beschriebenen Weise. Nach dem Durchbohren des gesamten Schichtenpaketes erfolgt mit Abbruch des Bohrvorganges eine Unterbrechung des Kühlens und des Absaugens. Der Abbruch des Bohrens wird durch mindestens einen Sensor (10), der weiterhin zur Erfassung der Durchflußmenge, der Strömungsgeschwindigkeit, der Temperatur-und Druckunterschiede des abgeführten Bohrmediums und zur Feststellung der Zerspanungstiefe im Schichtenpaket eingesetzt und innerhalb des anderen Kanales (5) des Körpers (1) angeordnet ist, initiiert, der dann seine Informationen an eine elektronische Auswerteeinheit weiterleitet. Nach dem Rücklauf des Bohrers ist der Bohrvorgang beendet. Die Erwärmung der Klebe- oder Dichtungsschicht durch die Außenluft und die Zerspanungswärme der bearbeiteten Blechschichten setzt ein und der (kurzzeitig) unterbrochene Aushärteprozeß dieser weichplastischen Schichten setzt sich fort.

Im besonderen sei bezüglich der Anordnung zusätzlich nachfolgendes erwähnt:
- das spanabhebende Werkzeug (4) kann in Äquivalenz zu einem Bohrer ebenso ein Fräser, vorzugsweise Hartstofffräser sein;
- der Einsatz eines Spiralbohrers oder eines Messerkopf- oder eines Langloch- oder eines Schaftfräsers für verschiedene Materialien unterschiedlicher Festigkeit ist auch denkbar;
- die Schichten, die aus einem Halbzeug bestehen, können weitestgehend aus Metall oder Kunststoff oder metallisierten Kunststoff oder metall- oder kunststoffähnlichen Materialien bestehen;
- das versprödbare Material soll immer wechselweise erhärt- oder erweichbar sein;
- die weitere Anordnung von einem zusätzlichen Kanal (11) zwischen dem Schutzelement (9) und der oberen Schicht (2) des Schichtenpaketes, der mit dem Zerspanungsraum und der Ansaug-oder Kühleinrichtung verbunden ist, wäre möglich;
- der Ausgang der an die Absaugeinrichtung angeschlossenen Kanäle (5) in der vertikalen Öffnung (3) ist mit einem Absaugstutzen versehen;
- der Ausgang der an die Ansaugeinrichtung angeschlossenen Kanäle (5) in der vertikalen Öffnung (3) ist mit einer Verwirbelungsdüse, die mit der Schneidengeometrie eine optimale Abführ der Stoffteile der Schichten (2) realisiert, versehen;
- der Ausgang der an die Kühleinrichtung angeschlossenen Kanäle (5) ist in der vertikalen Öffnung (3) mit einer trichterförmigen Austrittsdüse versehen;
- es ist günstigerweise eine verwirbelungsgünstige Schneidengeometrie, die auf die Verwirbelungsdüsen abgestimmt ist, realisiert, wobei eine speziell angeschliffene oder gesinterte Schneidengeometrie zur Erzeugung stabförmiger Stoffteile günstigerweise den verfahrensgemäßen Bohrvorgang unterstützt;
- im Werkzeugschaft des Werkzeuges (4) ist eine Schnittstelle zur Aufnahme des Kühlmittels realisiert;
- das Werkzeug (4) ist auf seiner stoffteileabtrennenden Manteloberfläche speziell beschichtet oder das Material und die Schneidengeometrien des Werkzeuges (4) sind entsprechend der abzutrennenden Stoffteileart der Schichten (2) gewählt.

Hervorzuheben ist, daß durch den Einsatz des versprödbaren Materiales als Schichtenmaterial bei entsprechender Tiefkühlung eine definierte Bohrung ohne Gratanteil erreicht wird. Der somit definierte Bohrlochabstand befindet sich genauestens innerhalb seiner Bohrtoleranz. Es erfolgt überwiegend kein oder nur ein geringes Eindringen von Spänematerial in die Randzone der zwischengelagerten Schicht. Auch die Gratbildung an der Randzone der Bohrung hält sich bei oder nach dem Bohreraustritt aus dem Schichtenpaket ebenso in tolerierbaren Grenzen. Die einsetzende Erweichung bzw. die Nichtbeeinträchtigung der ausgangsmäßig bei Normaltemperatur vorhandenen Werkstoffparameter des zeitweise versprödeten zwischengelagerten Materiales, dessen Aushärtung damit unterbrochen wurde, fällt ebenfalls, beispielsweise zugunsten der Anwendung einer geeigneten Verbindungstechnologie mit dem Werkstuck, vorteilhaft auf.

Derartig zu verbindende Schichten, die im Flugzeugbau beispielsweise durch Vernietung soweit wie möglich aneinander zu pressen sind, damit der geforderte Sitz und eine sehr hohe Stabilität der Verbindung garantiert ist, bei denen die zwischengelagerten Schichten temporär erhärt- bzw. versprödbar und nach erfolgter Zerspanung wieder erweichbar sind bevor sie entgültig aushärten, gestatten den technologischen Wegfall des Auffächerns von stapelweise nach der konventionellen Methode gebohrten kongruenten Blechen, die einen hoch ausgebildeten Bohrgratanteil besitzen.

### Bezugszeichen

- 1: Körper, ebenflächig u. / o. gekrümmt
- 2: Schicht
- 3: Öffnung, vertikal
- 4: Werkzeug, spanabhebend
- 5, 6, 11: Kanal
- 7: Symmetrieachse
- 8: Führungselement
- 9: Schutzelement
- 10: Sensor

## Patentansprüche

1. Verfahren zum Zerspanen von Schichten, die horizontal platten- oder bahnenförmig übereinander und zueinander unverrückbar gegen eine Längs- und Querverschiebung angeordnet werden und eine unterschiedliche Festigkeit besitzen sowie ein Schichtenpaket bilden, bei dem mit einem spanabhebenden Werkzeug an einer vorbestimmten Stelle eine Abtrennung von Stoffteilen der Schichten auf mechanischem Wege realisiert wird, wobei während des Zerspanungsprozesses an der Zerspanungsstelle die abgetrennten Stoffteile des Schichtenpaketes und ein kontinuierlich zugeführtes Kühlmittel gemeinsam mit einer in den Zerspanungsraum angesaugten Außenluft durch eine kontinuierliche Absaugung abgeführt werden und nach Beendigung des Zerspanungsprozesses die kontinuierlich fortgesetzte Kühlmittelzuführ und die Absaugung unterbrochen und nach Abbruch des Zerspanungsvorganges das Werkzeug in seine Ausgangsstellung zurückgeführt wird, **dadurch gekennzeichnet**,
- daß während eines Positionierungsvorganges des Werkzeuges gleichzeitig eine Vorkühlung der Schichten vorgenommen wird und daß das Schichtenpaket zumindest in einem bestimmten Bereich, der dem späteren Zerspanungseinfluß des Werkzeuges unterliegt und maßgeblich die spanabhebende Bearbeitung an der Zerspanungsstelle beeinflußt, intensiv tiefgekühlt vorgekühlt und mit einer hohen Einfriertiefe versorgt wird, wobei die Vorkühlung oder die kontinuierlich fortgesetzte Kühlung mit einem gasförmigen und / oder flüssigen Kühlmittel realisiert wird,
- daß die Tiefkühlung mit einer Temperatur realisiert wird, bei der das zwischen benachbarten Schichten, die aus Halbzeugen als Blechplatte bestehen, eingeschichtete Material versprödet wird,
- daß nach Abschluß des Positioniervorganges und der Vorkühlung der Zerspanungsprozeß mit einer hohen Schnittgeschwindigkeit an die Zerspanungsstelle realisiert wird,
- daß nach Abbruch des Zerspanungsvorganges die Versprödung des zwischengeschichteten Materiales aufgehoben wird.

2. Verfahren zum Zerspanen von Schichten nach Anspruch 1, dadurch gekennzeichnet, daß mit dem Vorkühlen ein Schockgefrieren des zwischen den benachbarten Schichten eingeschichteten Materiales mit dem Kühlmittel, vorzugsweise gasförmigen Kühlmittel, eintreten wird.

3. Verfahren zum Zerspanen von Schichten nach Anspruch 1, dadurch gekennzeichnet, daß die Kühlmittelzuführ auf das Schichtenpaket während der Vorkühlung und während des Zerspanungsprozesses unter Druck und durch Kühlmittelblasung realisiert wird, wobei der bestimmte Bereich des Schichtenpaketes kürzzeitig tiefgekühlt wird.

4. Verfahren zum Zerspanen von Schichten nach Anspruch 1, dadurch gekennzeichnet, daß die vorbestimmte Stelle vor Einleitung des Positioniervorganges mit mindestens einer Vorbohrung in einer oberen Schicht des Schichtenpaketes versehen und die Positionierung des Werkzeuges, die programmiert und / oder manuell vorgenommen und elektronisch und / oder visuell überprüft und möglicherweise korrigiert wird, dort erfolgen wird.

5. Verfahren zum Zerspanen von Schichten nach Anspruch 1, dadurch gekennzeichnet, daß der Zerspanungsprozeß mit radialer und / oder axialer Vorschubbewegung des Werkzeuges und / oder des Schichtenpaketes realisiert wird, wobei die Zerspanung mit geeignetem Werkzeug vorzugsweise durch Bohren oder Senken oder Fräsen und ohne oder nur sehr geringem Eindringen der abgetrennten Stoffteile in das zwischengeschichtete Material und ohne oder nur sehr geringer Gratbildung an den zerspanten Schichten und ohne Beeinträchtigung der ausgangsmäßig vorhandenen Werkstoffparameter des zwischengeschichteten Materiales realisiert wird, und daß der Zerspanungsprozeß bei nicht fortgesetzter kontinuierlicher Kühlmittelzuführ vorwiegend trocken erfolgen wird.

6. Anordnung zum Zerspanen von Schichten (2), die horizontal platten- oder bahnenförmig übereinander und zueinander unverrückbar gegen eine Längs- und Querverschiebung angeordnet sind und eine unterschiedliche Festigkeit besitzen sowie ein Schichtenpaket bilden, bei der ein spanabhebendes Werkzeug (4) an einer vorbestimmten Stelle zur Abtrennung von Stoffteilen der Schichten (2) auf mechanischem Wege angeordnet ist, bei der ein ebenflächiger und / oder gekrümmtflächiger Körper (1), dessen Begrenzungsflächen eine axialsymmetrische Figur darstellen, mit seiner Grundfläche plan auf der Deckfläche der oberen Schicht (2) des Schichtenpaketes fixierbar und mit einer vertikalen Öffnung (3), die entlang einer Symmetrieachse (7) eingelassen und lotrecht der Grundfläche des Körpers (1) angeordnet ist, versehen ist, durch die das spanabhebende Werkzeug (4) bis auf die Deckfläche der oberen Schicht (2) des Schichtpaketes mit seiner Schneidengeometrie bewegungsfrei einführbar ist, bei der mindestens einer der eingangsseitig an der Manteloberfläche des Körpers (1) beginnenden Kanäle (5) an eine Absaugvorrichtung angeschlossen ist und innerhalb des Werkzeuges (4) mindestens ein weiterer Kanal (6) vertikal verlaufend angeordnet ist, der in mehrere Kanalästelungen mündet, die ihren Ausgang zur Schneide gerichtet und / oder mittelbar in der Schneidennähe des Werkzeuges (4) besitzen, bei der an das Werkzeug (4) eine Kühlmittelzuführeinrichtung angeschlossen ist, wobei ein von ihr bereitgestelltes Kühlmittel zum Transport durch den weiteren Kanal (6) und dessen Kanalästelungen vorgesehen ist,
- wobei in den Körper (1) mehrere Kanäle (5) radial und / oder horizontal und / oder vertikal eingearbeitet sind und der Verbund dieser unterschiedlich verlaufenden Kanäle (5) vorgesehen ist, deren Eingang an der Manteloberfläche des Körpers (1) liegt und deren Ausgang in die vertikale Öffnung (3) zur Schneide gerichtet und / oder mittelbar in die Schneidennähe des Werkzeuges (4) mündet und daß bei der mindestens einer der ausgangsseitig zur Schneide gerichteten und / oder in die Schneidennähe mündenden Kanäle (5) des Körpers (1) an eine Ansaug- oder an die Kühleinrichtung angeschlossen ist,
- wobei der Verlauf der vertikal eingelassene Öffnung (3) entlang der Deckfläche des Körpers (1) horizontal und / oder vertikal und / oder radial realisiert ist,
- wobei ein Führungselement (8), vorzugsweise eine Führungsbuchse, das zur Aufnahme des Werkzeuges (4) dient, in die vertikale Öffnung (3) fest eingepaßt ist,
- wobei das Schichtenpaket aus wenigstens drei Schichten (2) zusammengesetzt ist, daß die Schichten (2) mit Halbzeugen aus Metall oder Kunststoff oder metallisierten Kunststoff oder metall- oder kunststoffähnlichen Materialien und zwischen diesen mit einem eingeschichtetem versprödbarem weichplastigen Material als Klebe- oder Dichtungsmaterial oder Lot, das sich wechselweise erhärten oder erweichen läßt, realisiert sind und die obere und die untere Schicht (2) als Blechplatte, vorzugsweise aus einer Aluminiumlegierung bestehend, angeordnet ist.

7. Anordnung zum Zerspanen von Schichten nach Anspruch 6, **dadurch gekennzeichnet**, daß der Körper (1) mit einer glockenförmigen Gestalt realisiert ist und sich vertikal und variabel in Richtung der Symmertieachse (7) verstellen läßt und seine vertikale Öffnung (3) an der Austrittsstelle der Symmetrieachse (7) deckungsgleich einer in die oberen Schicht (2) des Schichtenpaketes eingebrachten Vorbohrung liegt, die zur Zentrierung der Schneide des Werkzeuges (4) dient.

8. Anordnung zum Zerspanen von Schichten nach Anspruch 6, **dadurch gekennzeichnet**, daß die Bewegungsart des spanabhebenden Werkzeuges (4), das ein Hartstoffbohrer oder ein Hartstofffräser, vorzugsweise ein Spiralbohrer oder ein Messerkopf- oder ein Langloch- oder ein Schaftfräser für verschiedene Materialien unterschiedlicher Festigkeit, ist, gradlinig und / oder kreisförmig ist und die seine Bewegungsrichtung innerhalb des Körpers (1) horizontal und / oder vertikal veränderbar und mit ihm eine hohe Schnittgeschwindigkeit realisierbar ist, wobei sich in seinem Werkzeugschaft eine Schnittstelle zur Aufnahme des Kühlmittels befindet und seine stoffteileabtrennende Manteloberfläche speziell beschichtet oder sein Material und seine Schneidengeometrien entsprechend der abzutrennenden Stoffteileart der Schichten (2) gewählt sind.

9. Anordnung zum Zerspanen von Schichten nach Anspruch 6, **dadurch gekennzeichnet**, daß zwischen der Grundfläche des Körpers (1), die eine vertikale Öffnung (3) aufweist, und der oberen Schicht (2) des Schichtenpaketes ein platten- oder ringförmiges Schutzelement (9) mit einer Aussparung angeordnet ist, die kongruent der Öffnung (3) liegt, wobei das Schutzelement (9) einen Hohlkörper, vorzugsweise einen Schutzring, darstellt, der mit dem Zerspanungsraum und der Ansaug- oder Kühleinrichtung verbunden ist, und zwischen dem Schutzelement (9) und der oberen Schicht (2) des Schichtenpaketes wenigstens ein zusätzlicher Kanal (11) angeordnet ist, der mit dem Zerspanungsraum und der Ansaug- oder Kühleinrichtung verbunden ist.

10. Anordnung zum Zerspanen von Schichten nach Anspruch 6, **dadurch gekennzeichnet**, daß der Ausgang der an die Absaugeinrichtung angeschlossenen Kanäle (5) in der vertikalen Öffnung (3) mit einem Absaugstutzen und mit einer Verwirbelungsdüse, die mit der Schneidengeometrie des Werkzeuges (4), vorzugsweise eine verwirbelungsgünstige Schneidengeometrie, die auf die Verwirbelungsdüsen abgestimmt ist und eine speziell angeschliffene oder gesinterte Schneidengeometrie zur Erzeugung staubförmiger Stoffteile besitzt, zur optimalen Abführ der Stoffteile der Schichten (2) versehen ist und daß der Ausgang der an die Kühleinrichtung angeschlossenen Kanäle (5) in der vertikalen Öffnung (3) eine trichterförmige Austrittsdüse besitzt, wobei innerhalb der mit der Absaugeinrichtung verbundenen Kanäle (5) mindestens ein dort angeordneter Sensor (10) die Erfassung der Durchflußmenge, der Strömungsgeschwindigkeit, der Temperatur- und Druckunterschiede des abgeführten Mediums und die Feststellung der Zerspanungstiefe im Schichtenpaket und die Unterbrechung des Zerspanungvorganges realisiert, der mit einer elektronischen Auswerteeinheit in Verbindung steht, und das durch einen oder mehrere Kanäle (5) des Körpers (1) zur Absaugeinrichtung abgeführte Medium aus dem Kühlmittel und der angesaugten Luft der Ansaugvorrichtung besteht.

## Claims

1. Method of cutting layers, which are disposed horizontally in the form of panels or webs one on top of the other and immovably relative to one another so as to prevent longitudinal and transverse displacement and are of differing strength and form a laminated assembly, whereby a separation of material particles of the layers is effected mechanically by a cutting tool at a predetermined point, during the cutting process at the cutting point the separated material particles of the laminated assembly and a continuously fed coolant being removed, jointly with external air sucked into the cutting area, by continuous extraction and after termination of the cutting process the continuously maintained coolant feed and the extraction being interrupted and after discontinuation of the cutting process the tool being returned into its starting position,
**characterized in**
- that during a positioning process of the tool a preliminary cooling of the layers is simultaneously effected and that the laminated assembly at least in a specific region, which is subject to the subsequent cutting influence of the tool and crucially influences the cutting at the cutting point, is subjected to rapid preliminary deep-cooling and provided with a high frozen depth, the preliminary cooling or the continuously maintained cooling being effected by a gaseous and/or liquid coolant,
- that the deep-cooling is effected at a temperature at which the material, which is layered in between adjacent layers which comprise semifinished products in the form of sheet metal plate, is embrittled,
- that, after conclusion of the positioning process and preliminary cooling, the cutting process is effected at a high cutting speed at the cutting point,
- that, after discontinuation of the cutting process, the embrittlement of the interlayered material is suspended.

2. Method of cutting layers according to claim 1, characterized in that with the preliminary cooling a shock-freezing of the material layered in between the adjacent layers is initiated with the coolant, preferably gaseous coolant.

3. Method of cutting layers according to claim 1, characterized in that the coolant feed onto the laminated assembly during preliminary cooling and during the cutting process is effected under pressure and by coolant blowing, the specific region of the laminated assembly being deep-cooled within a short time.

4. Method of cutting layers according to claim 1, characterized in that the predetermined point, prior to initiation of the positioning process, is provided with at least one pilot bore in a top layer of the laminated assembly and the positioning of the tool, which is effected in a programmed manner and/or manually and is electronically and/or visually checked and possibly corrected, is effected there.

5. Method of cutting layers according to claim 1, characterized in that the cutting process is effected with a radial and/or axial feed motion of the tool and/or of the laminated assembly, cutting being effected with a suitable tool preferably by drilling or counter-sinking or milling and with no or only very little penetration of the separated material particles into the interlayered material and with no or only very little burr formation at the cut layers and with no impairment of the original material parameters of the interlayered material, and that the cutting process, when the continuous coolant feed is not maintained, is effected in a predominantly dry manner.

6. Arrangement for cutting layers (2), which are disposed horizontally in the form of panels or webs one on top of the other and immovably relative to one another so as to prevent longitudinal and transverse displacement and are of differing strength and form a laminated assembly, in which arrangement a cutting tool (4) is disposed at a predetermined point for mechanically separating material particles of the layers (2), a plane-surface and/or curved-surface body (1), the boundary surfaces of which represent an axially symmetric figure, is fixable by its base surface flat on the top surface of the top layer (2) of the laminated assembly and is provided with a vertical opening (3), which is let in along an axis of symmetry (7) and disposed perpendicular to the base surface of the body (1) and through which the cutting tool (4) may be introduced with freedom of movement of its cutting edge geometry as far as the top surface of the top layer (2) of the laminated assembly, at least one of the channels (5) beginning on the inlet side at the lateral surface of the body (1) is connected to an extraction device and at least one further, vertically extending channel (6) is disposed inside the tool (4), said channel opening into a plurality of channel branches, which have their outlet directed towards the cutting edge and/or in the immediate vicinity of the cutting edge of the tool (4), a coolant feed device is connected to the tool (4), a coolant supplied by the latter device being intended for conveying through the further channel (6) and the latter's channel branches,
- wherein a plurality of channels (5) are radially and/or horizontally and/or vertically worked into the body (1) and the interconnection of said differently extending channels (5) is provided, of which channels the inlet lies at the lateral surface of the body (1) and the outlet opens into the vertical opening (3) so as to be directed towards the cutting edge and/or directly into the vicinity of the cutting edge of the tool (4), and wherein at least one of the channels (5) of the body (1), which at the outlet side are directed towards the cutting edge and/or open into the vicinity of the cutting edge, is connected to an extraction device or to the cooling device,
- wherein the course of the vertically let-in opening (3) along the top surface of the body (1) is effected horizontally and/or vertically and/or radially,
- wherein a guide element (8), preferably a guide bush, which is used to receive the tool (4), is fitted tightly into the vertical opening (3),
- wherein the laminated assembly comprises at least three layers (2), the layers (2) are realized by semifinished products made of metal or plastic material or metal-plated plastic material or metal- or plastic-like materials and, between said semifinished products, by an interlayered, embrittleable, malleable material as an adhesive or sealing material or solder, which may be alternately hardened or softened, and the top and the bottom layer (2) is disposed in the form of sheet metal plate, preferably made of an aluminium alloy.

7. Arrangement for cutting layers according to claim 6, **characterized in** that the body (1) is fashioned in the shape of a bell and is displaceable vertically and variably in the direction of the axis of symmetry (7) and its vertical opening (3) at the emergence point of the axis of symmetry (7) coincides with a pilot bore, which is introduced into the top layer (2) of the laminated assembly and is used to centre the cutting edge of the tool (4).

8. Arrangement for cutting layers according to claim 6, **characterized in** that the style of motion of the cutting tool (4), which is a hard material drill or a hard material milling cutter, preferably a twist drill or an inserted tooth milling cutter or a long-hole milling cutter or an end-milling cutter for various materials of differing strength, is rectilinear and/or circular and its direction of motion inside the body (1) is horizontally and/or vertically variable and with said tool a high cutting speed is achievable, a cut point for receiving the coolant being situated in the shank of the tool and the material particle-separating lateral surface of the tool being specially coated or the material and cutting edge geometries of the tool being selected in accordance with the type of material particles of the layers (2) which is to be separated.

9. Arrangement for cutting layers according to claim 6, **characterized in** that disposed between the base surface of the body (1) having a vertical opening (3) and the top layer (2) of the laminated assembly is a plate- or ring-shaped protective element (9) having a recess which is congruent with the opening (3), the protective element (9) being a hollow body, preferably a protective ring, which is connected to the cutting area and the intake or cooling device, and disposed between the protective element (9) and the top layer (2) of the laminated assembly is at least one additional channel (11) which is connected to the cutting area and the intake or cooling device.

10. Arrangement for cutting layers according to claim 6, **characterized in** that the outlet of the channels (5) in the vertical opening (3), which are connected to the extraction device, for optimum removal of the material particles of the layers (2) is provided with an extraction connection piece and with a vortexing nozzle, which with the cutting edge geometry of the tool (4) preferably possesses a vortex-promoting cutting edge geometry tuned to the vortexing nozzles and a specially ground or sintered cutting edge geometry for producing dust-like material particles, and that the outlet of the channels (5) in the vertical opening (3), which are connected to the cooling device, has a funnel-shaped outlet nozzle, at least one sensor (10) disposed inside the channels (5) connected to the extraction device detecting the flow rate, the flow speed, the temperature and pressure differences of the removed medium and determining the cutting depth in the laminated assembly and the interruption of the cutting process, said sensor being connected to an electronic evaluation unit, and the medium carried away through one or more channels (5) of the body (1) to the extraction device comprises the coolant and the intake air of the intake device.

## Revendications

1. Procédé destiné à usiner des couches qui sont superposées horizontalement en forme de plaques ou de bandes et disposées l'une par rapport à l'autre de façon immuable par rapport à un coulissement longitudinal et transversal, qui possèdent une résistance différente et forment un ensemble de couches, dans le cas duquel une coupe des particules de matière des couches est réalisée mécaniquement en un point prédéterminé au moyen d'un outil à enlèvement de copeaux, les particules de matière coupées de l'ensemble des couches et un agent de refroidissement continuellement amené de même que l'air extérieur aspiré dans l'espace d'usinage par une aspiration constante étant évacués au cours du processus d'usinage au point d'usinage, l'amenée continue de l'agent de refroidissement et l'aspiration étant interrompues au terme du processus d'usinage et l'outil étant ramené dans sa position initiale après arrêt du processus d'usinage, **caractérisé en ce que**,
- au cours du processus de positionnement de l'outil, une préréfrigération des couches est simultanément opérée et en ce que l'ensemble des couches est intensivement préréfrigéré à basses températures au moins dans une zone précise qui est soumise à l'influence d'usinage ultérieure de l'outil et qui, conformément, influence le traitement au point d'usinage et présente une profondeur de congélation élevée, la préréfrigération ou le refroidissement continu étant réalisé au moyen d'un agent de refroidissement gazeux et/ou liquide,
- la réfrigération est effectuée à une température à laquelle le matériau situé entre les couches voisines, qui se composent de produits semi-finis tels que des plaques de tôle, devient fragile,
- après la fin du processus de positionnement et de préréfrigération, le processus d'usinage est réalisé à une vitesse de coupe élevée au point d'usinage,
- après l'arrêt du processus d'usinage, la tendance à la fragilité du matériau situé entre les couches disparaît.

2. Procédé destiné à usiner des couches selon la revendication 1, caractérisé en ce que, avec la préréfrigération intervient une congélation ultrarapide du matériau situé entre les couches voisines avec l'agent de refroidissement, préférentiellement sous forme de gaz.

3. Procédé destiné à usiner des couches selon la revendication 1, caractérisé en ce que l'amenée de l'agent de refroidissement à l'ensemble des couches au cours de la préréfrigération et du processus d'usinage s'effectue sous pression et par soufflage de l'agent de refroidissement, la zone définie de l'ensemble des couches étant réfrigérée pendant un court moment.

4. Procédé destiné à usiner des couches selon la revendication 1, caractérisé en ce que la position définie avant le début du processus de positionnement est pourvue d'au moins un avant-trou dans la couche supérieure de l'ensemble des couches et en ce que le positionnement de l'outil, qui est programmé et/ou effectué manuellement et testé électroniquement et/ou visuellement et éventuellement corrigé, s'effectue à cet endroit.

5. Procédé destiné à usiner des couches selon la revendication 1, caractérisé en ce que le processus d'usinage est réalisé avec un mouvement d'avancement radial et/ou axial de l'outil et/ou de l'ensemble des couches, l'usinage s'effectuant avec l'outil approprié préférentiellement par forage ou fraisage et sans ou uniquement avec une pénétration réduite des particules de matière coupées dans le matériau situé entre les couches et sans ou avec une légère formation d'arête sur les couches usinées et sans tenir compte des paramètres initiaux du matériau situé entre les couches, et en ce que le processus d'usinage s'effectue principalement à sec lorsque l'amenée de l'agent de refroidissement n'est pas continue.

6. Procédé destiné à usiner des couches (2) qui sont superposées horizontalement en forme de plaques ou de bandes et disposées l'une par rapport à l'autre de façon immuable par rapport à un coulissement longitudinal et transversal, qui possèdent une résistance différente et forment un ensemble de couches, dans lequel un outil à enlèvement de copeaux (4) est disposé en un point prédéterminé afin de couper mécaniquement les particules de matières des couches (2), dans lequel un corps plat et/ou courbé (1) dont les surfaces de limitation décrivent une figure axialement symétrique, peut être fixé de façon plane avec sa surface de base sur la surface de la couche supérieure (2) de l'ensemble des couches et est pourvu d'un alésage vertical (3) aménagé le long de l'axe de symétrie (7) et disposé perpendiculairement à la surface de base du corps (1), à travers lequel peut être inséré l'outil à enlèvement de copeaux (4) de manière à pouvoir coulisser librement avec sa géométrie de coupe jusqu'à la surface de la couche supérieure (2) de l'ensemble des couches, dans lequel au moins un des canaux (5) commençant côté entrée sur la surface latérale du corps (1) est relié à un dispositif d'aspiration et au moins un autre canal (6) est disposé verticalement à l'intérieur de l'outil (4), lequel canal aboutit dans plusieurs ramifications de canal dont la sortie est dirigée vers l'arête de coupe et/ou directement à proximité de l'arête de coupe de l'outil (4), dans lequel un dispositif d'amenée de l'agent de refroidissement est connecté à l'outil (4), un agent de refroidissement apporté par celui-ci étant prévu pour le transport à travers l'autre canal (6) et ses ramifications,
- dans le cas duquel plusieurs canaux (5) sont aménagés radialement et/ou horizontalement et/ou verticalement dans le corps (1) et la liaison de ces canaux (5) s'étendant différemment est prévue, canaux dont l'entrée se situe sur la surface latérale du corps (1) et dont la sortie dans l'alésage vertical (3) est dirigée vers l'arête de coupe et/ou aboutit directement à proximité de l'arête de coupe de l'outil (4) et en ce que au moins un des canaux (5) du corps (1) orientés côté sortie vers l'arête de coupe et/ou débouchant à proximité de l'arête de coupe est connecté à un dispositif d'aspiration ou au dispositif de refroidissement,
- dans le cas duquel le parcours de l'alésage (3) pratiqué verticalement le long de la surface du corps (1) est réalisé horizontalement et/ou verticalement et/ou radialement,
- dans le cas duquel un élément de guidage (8), préférentiellement un coussinet de guidage, destiné à accueillir l'outil (4), est inséré fixement dans l'alésage vertical (3),
- dans le cas duquel l'ensemble des couches se compose au moins de trois couches, en ce que les couches (2) sont réalisées au moyen de produits semi-finis en métal ou en plastique ou en plastique métallisé ou à partir de matériaux semblables au métal ou au plastique et entre lesquelles se trouve un matériau en plastique doux pouvant devenir fragile tel qu'un matériau adhésif ou d'étanchéité ou du plomb qui peut alternativement durcir ou s'assouplir, et les couches supérieure et inférieure (2) sont des plaques de tôle, se composant préférentiellement d'un alliage d'aluminium.

7. Dispositif destiné à usiner des couches selon la revendication 6, caractérisé en ce que le corps (1) est réalisé en forme de cloche et peut être déplacé verticalement et de façon variable dans la direction de l'axe de symétrie (7) et en ce que son alésage vertical (3) coïncide sur le point de sortie de l'axe de symétrie (7) avec un avant-trou aménagé dans la couche supérieure (2) de l'ensemble des couches, qui sert à centrer l'arête de coupe de l'outil (4).

8. Dispositif destiné à usiner des couches selon la revendication 6, caractérisé en ce que la manière dont se déplace l'outil à enlèvement de copeaux (4), qui est un foret à matériau dur ou une fraise à matériau dur, préférentiellement un foret en spirale ou une fraise à lames rapportées, une fraise à rainurer ou une fraise deux tailles pour divers matériaux de résistance différente, est droite et/ou circulaire et sa direction de déplacement à l'intérieur du corps (1) peut être modifiée horizontalement et/ou verticalement et il est possible d'atteindre une vitesse de coupe élevée grâce audit outil, un point de coupe destiné à accueillir l'agent de refroidissement se trouvant dans sa tige d'outil, la surface latérale coupant les particules de matière étant spécialement recouverte ou son matériau et sa géométrie de coupe étant choisis conformément au type de particule de matériau des couches (2) à couper.

9. Dispositif destiné à usiner des couches selon la revendication 6, caractérisé en ce que entre la surface de base du corps (1), qui présente un alésage vertical (3), et la couche supérieure (2) de l'ensemble des couches est disposé un élément de protection (9) circulaire ou en forme de plaque pourvu d'un évidement, qui se trouve de façon congruente par rapport à l'alésage (3), l'élément de protection (9) représentant un corps creux, préférentiellement un anneau de sûreté, connecté à l'espace d'usinage et au dispositif d'aspiration ou de refroidissement, et entre l'élément de protection (9) et la couche supérieure (2) de l'ensemble des couches étant au moins disposé un canal supplémentaire (11) relié à l'espace d'usinage et au dispositif d'aspiration ou de refroidissement.

10. Procédé destiné à usiner des couches selon la revendication 6, caractérisé en ce que la sortie des canaux (5) reliés au dispositif d'aspiration dans l'alésage vertical (3) est pourvue, afin que l'amenée des particules de matière des couches (2) soit optimale, d'une tubulure d'aspiration et d'une tuyère de tourbillonnement déterminée avec la géométrie de coupe de l'outil (4), préférentiellement une géométrie de coupe favorisant le tourbillonnement, d'après les tuyères de tourbillonnement et possède une géométrie de coupe spécialement affûtée ou frittée destinée à produire des particules de matière sous forme de poussières et en ce que la sortie des canaux (5) reliés au dispositif de refroidissement dans l'alésage vertical (3) possède une tuyère d'échappement en forme d'entonnoir, au moins un capteur (10) disposé à l'intérieur des canaux (5) connectés au dispositif d'aspiration enregistrant la quantité de passage, la vitesse d'écoulement, les différences de température et de pression de l'agent amené, constatant la profondeur d'usinage dans l'ensemble des couches et interrompant le processus d'usinage, lequel capteur (10) se trouve en connexion avec une unité d'évaluation électronique et en ce que l'agent évacué vers le dispositif d'aspiration par un ou plusieurs canaux (5) du corps (1) se compose de l'agent de refroidissement et de l'air aspiré du dispositif d'aspiration.
